# EUROPEAN PATENT APPLICATION

(11) **EP 2 819 384 A1**
(43) Date of publication of application: **31.12.2014**
(21) Application number: 13751360.2
(22) Date of filing: 21.02.2013
(51) Int. Cl.: H04L 29/12, H04L 29/06, H04L 12/28

(54) **METHOD, DEVICE AND SYSTEM FOR VIDEO MONITORING BASED ON UNIVERSAL PLUG AND PLAY (UPNP)**

(30) Priority: 24.02.2012 CN 201210044252
(71) Applicant: ZTE Corporation, Shenzhen, Guangdong 518057 (CN)
(72) Inventor: WANG, Minghao, Shenzhen Guangdong 518057 (CN); LIU, Changlei, Shenzhen Guangdong 518057 (CN)
(74) Representative: Modiano, Micaela Nadia
(86) International application number: PCT/CN2013/071746
(87) International publication number: WO 2013/123888

(57) **Abstract**

Disclosed is a method for video monitoring based on Universal Plug and Play (UPnP), comprising the steps of: a camera device saves an improved Digital Media Server (DMS) function; after receiving the request transmitted by a Digital Media Control (DMC) device, for obtaining the video stream, the camera device analyzes the request for obtaining video stream by the improved DMS function and then starts camera shooting. Also disclosed is a device and system for video monitoring based on UPnP. The present invention can provide function of real-time video monitoring in the UPnP network architecture.

## Description

### TECHNICAL FIELD

The disclosure relates to, among others, Universal Plug and Play (UPnP) technology in a home network, and more particularly to a method, an apparatus and a system for implementing video monitoring based on UPnP.

### BACKGROUND

The home network refers to a home information platform integrating a home control network with a multimedia information network, implements the interconnection and management of an information device, a communication device, an entertainment device and other devices within the home, and forms a system where data and multimedia information are shared. In the home network, devices can be connected with one another by using a UPnP structure.

Based on Internet-related protocols and technology, the UPnP structure defines the communication protocols between devices, mainly including Transmission Control Protocol/Internet Protocol (TCP/IP) and Hyper Text Transport Protocol (HTTP) for establishing the network connection architecture, and provided services are described in Extensible Markup Language (XML).

The device in the UPnP may have three following functions: a Digital Media Server (DMS) function, a Digital Media Control (DMC) function and a Digital Media Renderer (DMR) function, and can serve as a DMS device, DMC device and DMR device by installing a module with the DMS, DMC or DMR function therein. The DMS device is configured to establish connection between the DMC device and the DMS device by using a Connection Manager Service (CMS), mange the stored media data by using a Content Directory Service (CDS), and control the transmission of media data between the DMS device and the DMC device by using an Audio and Video Transport (AVT) service. The DMC device is configured to manage the DMS device and the DMR device in the UPnP architecture, timely update a device list saved by itself when the DMS device and/or the DMR device join(s)/exit(s) the network, and assign a DMR device to play media data in a format of media data saved in the DMS device and control the play process. The DMR device is configured to play the media data in the format of media data provided by the DMS device based on the control of the DMC device.

However, in the above solution, it have not been defined a rule for the control of a camera device in the UPnP, the camera device cannot be controlled as the DMS device, neither can a real-time video monitoring function be provided in the UPnP.

### SUMMARY

In view of this, the embodiments of the disclosure provides a method, an apparatus and a system for implementing video monitoring based on the UPnP, so as to add a rule for the control of a camera device and provide a real-time video monitoring function in a UPnP structure.

To this end, the technical solution of the disclosure is implemented as follows.

The disclosure provides a method for video monitoring based on UPnP, including:
the camera device receives a request of acquiring a video stream from a DMC device, and starts shooting after parsing the request of acquiring the video stream by using an improved DMS function saved on the camera device.

In the solution, the improved DMS function may include: an existing DMS function and a rule of parsing a camera-device-related control instruction,
the rule of parsing the camera-device-related control instruction may include that: the request of acquiring the video stream is parsed in a Simple Object Access Protocol (SOAP) format, and an instruction of rotating the camera is parsed in an XML format.

In the solution, the method may further include that: before the camera device receives the request of acquiring the video stream from the DMC device, when receiving a camera-device-query message from the DMC device, the camera device returns a response message for the camera-device-query message to the DMC device.

In the solution, the method may further include that: after the shooting is started, the camera device adjusts the angle of the camera according to an instruction of rotating the camera from the DMC device.

In the solution, the method may further include that: before the camera device receives the request of acquiring the video stream from the DMC device, the DMC device writes the request of acquiring the video stream by using an improved DMC function saved on the DMC device and sends the request of acquiring the video stream to the camera device.

In the solution, the improved DMC function saved on the DMC device may include: an existing DMC function and a rule of writing a camera-device-related control instruction, and
the rule of writing the camera-device-related control instruction may include that: the request of acquiring the video stream is written in an SOAP format and an instruction of rotating the camera is written in an XML format.

In the solution, the method may further include that: before the DMC device writes the request of acquiring the video stream by using the improved DMC function saved on the DMC device, the DMC device sends a camera-device-query message to the camera device and receives a response message for the camera-device-query message from the camera device.

In the solution, the method may further include that: after the request of acquiring the video stream is sent to the camera device, when the camera device supports a rotation function, the DMC device sends an instruction of rotating the camera to the camera device.

The disclosure provides a method for video monitoring based on UPnP, including:
the DMC device writes a request of acquiring a video stream by using an improved DMC function saved on the DMC device and sends the request of acquiring the video stream to a camera device.

In the solution, the improved DMC function saved on the DMC device may include: an existing DMC function and a rule of writing a camera-device-related control instruction, and
the rule of writing the camera-device-related control instruction may include that: the request of acquiring the video stream is written in an SOAP format and an instruction of rotating the camera is written in an XML format.

In the solution, the method may further include that: before the DMC device writes the request of acquiring the video stream by using the improved DMC function saved on the DMC device, the DMC device sends a camera-device-query message to the camera device and receives a response message for the camera-device-query message from the camera device.

In the solution, the method may further include that: after the request of acquiring the video stream is sent to the camera device, when the camera device supports a rotation function, the DMC device sends an instruction of rotating the camera to the camera device.

The disclosure further provides a system for video monitoring based on UPnP, including: a camera device and a DMC device,
the camera device is configured to save an improved DMS function, receive a request of acquiring a video stream from the DMC device, and start shooting after parsing the request of acquiring the video stream by using the improved DMS function saved on the camera device, and
the DMC device is configured to save an improved DMC function, write the request of acquiring the video stream by using the improved DMC function saved on the DMC device and send the request of acquiring the video stream to the camera device.

The disclosure further provides a camera device, including: an improved DMS function module and a shooting function module,
the improved DMS function module is configured to save an improved DMS function, parse a request of acquiring a video stream from a DMC device by using the improved DMS function, and notify the shooting function module to start shooting according to the request, and
the shooting function module is configured to start shooting according to the notification from the improved DMS function module.

In the solution, the improved DMS function module may be specifically configured to save an existing DMS function and a rule of parsing a camera-device-related control instruction, the rule of parsing the camera-device-related control instruction may include that: the request of acquiring the video stream is parsed in an SOAP format, and an instruction of rotating the camera is parsed in an XML format.

In the solution, the improved DMS function module may be further configured to, when receiving a camera-device-query message from the DMC device, return a response message for the camera-device-query message to the DMC device.

In the solution, the improved DMS function module may be further configured to notify a shooting control module to adjust the angle of the camera according to the instruction of rotating the camera from the DMC device,

the shooting control module may be configured to receive the notification from the improved DMS function module and adjust the angle of the camera according to the notification.

The disclosure further provides a DMC device, including: an improved DMC function module, which is configured to save an improved DMC function, write a request of acquiring a video stream by using the improved DMC function and send the request of acquiring the video stream to a camera device.

In the solution, the improved DMC function module may be specifically configured to save an existing DMC function and a rule of writing a camera-device-related control instruction, the rule of writing a camera-device-related control instruction may include that: the request of acquiring the video stream is written in an SOAP format, and an instruction of rotating the camera is written in an XML format.

In the solution, the improved DMC function module may be specifically configured to send a camera-device-query message to the camera device and receive a response message for the camera-device-query message from the camera device.

In the solution, the improved DMC function module may be specifically configured to send an instruction of rotating the camera to the camera device when the camera device supports a rotation function.

According to the method, the apparatus and the system for video monitoring based on UPnP provided by the disclosure, by presetting the improved DMS function and the improved DMC function in the camera device and the DMC device respectively, the DMC device can write a control operation instruction for the camera device, and the camera device can parse the control operation instruction. In such way, the camera device can start shooting after receiving the request of acquiring a video stream from the DMC device, and therefore, a real-time video monitoring can be implemented in the UPnP structure.

### BRIEF DESCRIPTION OF THE DRAWINGS

Fig. 1 is a diagram showing the processing flow of a camera device in a method for implementing video monitoring based on UPnP according to an embodiment of the disclosure;
Fig. 2 is a diagram showing the processing flow of a DMC device in a method for implementing video monitoring based on UPnP according to an embodiment of the disclosure; and
Fig. 3 is a diagram showing the composition structure of a system for implementing video monitoring based on UPnP according to an embodiment of the disclosure.

### DETAILED DESCRIPTION

The basic idea of the disclosure is that: a camera device and a DMC device save an improved DMS function and an improved DMC function respectively; the DMC device writes a request of acquiring a video stream by using the improved DMC function and sends the request to the camera device; and the camera device receives the request from the DMC device and starts shooting after parsing the request by using the improved DMS function.

The disclosure is further described below in combination with the accompanying drawings and embodiments in detail.

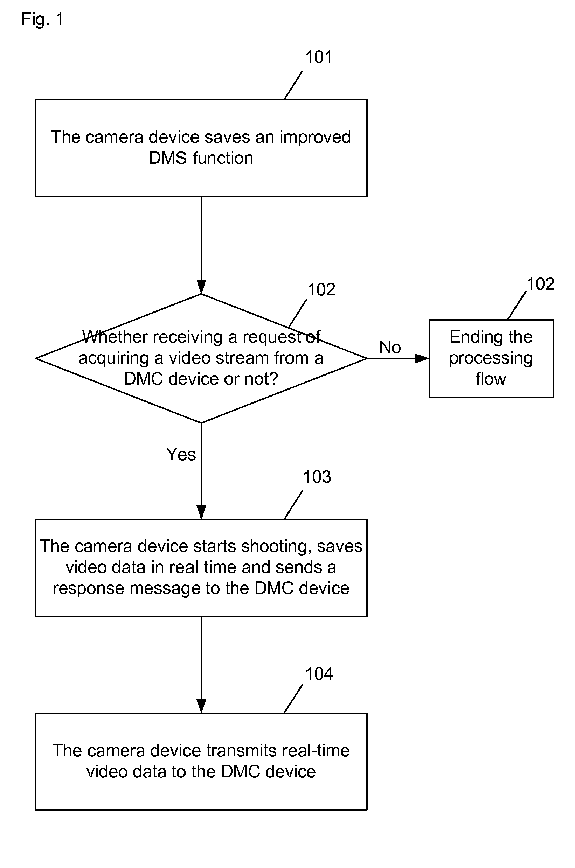

The processing flow of a camera device in a method for implementing video streaming based on UPnP provided by the disclosure is as shown in Fig. 1, including the following steps.

Step 101: the camera device saves an improved DMS function.

Here, the camera device may be an existing camera device with a Wireless Fidelity (Wi-Fi) function.

The improved DMS function may include: all the DMS functions specified in the prior art and a rule of parsing a camera-device-related control instruction. Those skilled in the art can learn from prior art how to provide all the DMS functions, thereby needing no further description.

The rule of parsing a camera-device-related control instruction may include that: the request of acquiring a video stream is parsed in an SOAP format and an instruction of rotating the camera is parsed in an XML format. All these parsing ways conform to the regulations of the prior art, thereby needing no further description.

Step 102: after joining a home network, the camera device parses the information received from the DMC device by using the improved DMS function and determines whether it is received a request of acquiring a video stream from the DMC device; if so, Step 103 is executed; otherwise, the processing flow is ended.

Specifically, after joining the home network, the camera device parses the information received from the DMC device by using the improved DMS function and determines whether it is received a camera-device-query message from the DMC device; if so, the camera device returns a response message for the camera-device-query message to the DMC device and then determines whether it is received a request of acquiring a video stream from the DMC device; if so, Step 103 is executed; otherwise, the camera device continues to determine whether it is received the camera-device-query message. If the camera device determines it does not receive any camera-device-query message from the DMC device, the camera device continues to determine whether it is received the camera-device-query message from the DMC device.

Here, joining the home network may be carried out according to the DMS function specified in the prior art and may include that: when the camera device is turned on and accesses the home network, an Internet Protocol (IP) address is acquired from the Dynamic Host Configuration Protocol (DHCP) server in the home network according to the DHCP. The camera-device-query message may include: an IP address of a sending end device, message type, response waiting time and Search Target (ST). The ST field describes a device to be looked for. A method for writing and a method for reading the camera-device-query message both conform to the regulations of the Simple Service Discovery Protocol (SSDP) in the prior art, thereby needing no further description.

Returning a response message for the camera-device-query message to a corresponding DMC device may be carried out according to the DMS function specified in the prior art and may include that: the camera device compares an ST field in the received camera-device-query message with the device description information saved in the camera device; if they are identical, the camera device returns a response message which contains the Uniform Resource Locator (URL) address of the description information of the camera device to the corresponding DMC device; otherwise, it stops the processing flow. The corresponding DMC device is determined according to the IP address of a sending end device in the camera-device-query message.

Step 103: the camera device starts shooting, caches video data in real time and sends a response message to a corresponding DMC device.

Specifically, after the camera device starts shooting, the shot video is encoded and compressed in real time to be cached under a specified path; and a URL address corresponding to the path caching the video data is sent to a corresponding DMC device as a response message for the request of acquiring a video stream.

Here, the specified path may be a folder preset by a user according to the actual situation. For example, it may be specified that the path is from a root directory. The encoding and compression are that: a shot video is converted from YUV format into H263 format, and the conversion method is the prior art, thereby needing no further description. The writing format of the response message is a POST format in the HTTP, and the specific writing method is the prior art, thereby needing no further description.

Step 104: the camera device transmits real-time video data to the DMC device.

Here, the transmission is carried out in accordance with the regulations of the DMS function in the prior art and may be as follows: the camera device receives a request of transmitting video data from the DMC device and sends the real-time video data cached under a specified path to the DMC device.

After Step 104, the camera device may further determine in real time whether an instruction of terminating connection is received; if so, the video transmission is ended, the camera device is turned off and the cached video data is cleaned out; otherwise, Step 104 is continued.

In addition, after Step 104, when the camera device is a device with a rotatable camera, the angle of the camera may be adjusted according to an instruction of rotating the camera, including that: the camera device determines whether an instruction of rotating the camera is received; if so, the angle of the camera is adjusted according to the instruction of rotating the camera; otherwise, Step 104 is continued.

The instruction of rotating the camera may include rotating the direction and angle of the camera; and the writing method for the instruction of rotating the camera adopts the XML format specified in the UPnP technology, thereby needing no further description.

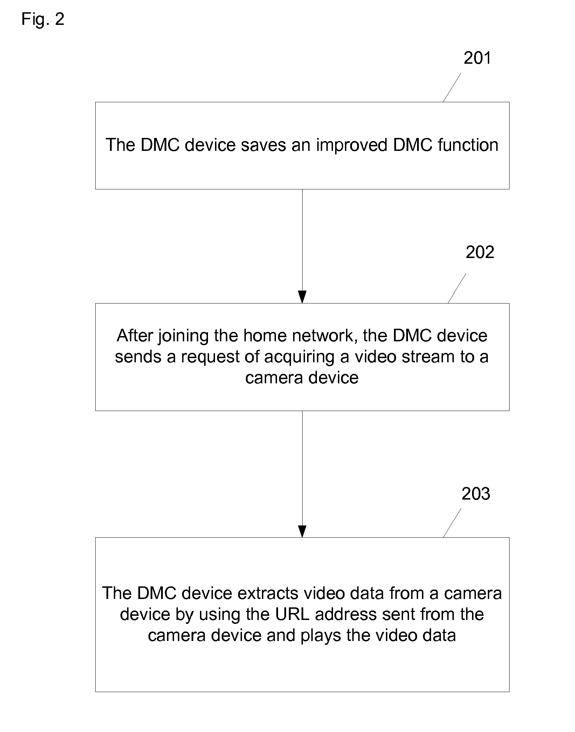

The processing flow of a DMC device in a method for implementing video monitoring based on UPnP provided by the disclosure is as shown in Fig. 2, including the following steps.

Step 201: the DMC device saves an improved DMC function.

Here, the improved DMC function may include: all the DMC functions specified in the prior art and a rule of writing a camera-device-related control instruction. Those skilled in the art can learn from prior art how to provide all the DMC functions, thereby needing no further description.

The rule of writing a camera-device-related control instruction may include that: a request of acquiring a video stream is written in an SOAP format and an instruction of rotating the camera is written in an XML format. The writing way conforms to the regulations of the prior art, thereby needing no further description.

Step 202: after joining the home network, the DMC device sends a request of acquiring a video stream to a camera device.

Specifically, after joining the home network, the DMC device sends a camera-device-query message to all the devices in the home network when it needs to use a camera device; the DMC device acquires device description information according to the URL address in the received response message for the camera-device-query message, and selects a camera device according to the acquired device description information; and then the DMC device sends a request of acquiring a video stream to the selected camera device.

Here, sending the camera-device-query message and selecting the camera device according to the acquired device description information are both carried out in accordance with the regulations of the DMC function in the prior art, thereby needing no further description.

Step 203: the DMC device extracts video data from a camera device by using the URL address sent from the camera device and plays the video data.

Here, extracting video data from the camera device by using the URL address sent from the camera device is the prior art, thereby needing no further description.

Playing the video data is carried out by a device with a DMR function selected according to the prior art, thereby needing no further description.

In addition, the DMC device may further determine whether the camera device supports a rotation function according to the received device description information; and if so, an instruction of rotating the camera may be sent to the camera device according to the selection of the user after Step 203. In addition, the DMC device may further send an instruction of terminating connection to the camera device when the user does not need to watch real-time video monitoring.

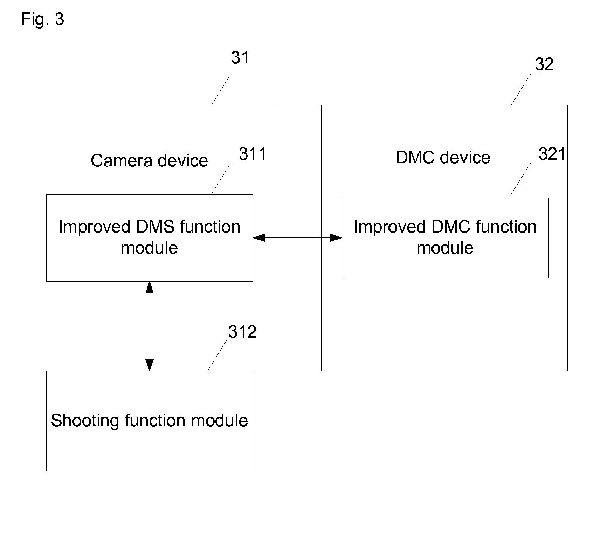

A system for implementing video monitoring based on UPnP provided by the disclosure is as shown in Fig. 3, including: a camera device 31 and a DMC device 32.

The camera device 31 is configured to save an improved DMS function, receive a request of acquiring a video stream from the DMC device 32 and start shooting after parsing the request of acquiring the video stream by using the improved DMS function.

The DMC device 32 is configured to save an improved DMC function, write the request of acquiring the video stream by using the improved DMC function and send the request of acquiring the video stream to the camera device 31.

The camera device 31 may be an existing camera device with a Wi-Fi function.

The camera device 31 may be specifically configured to save all the DMS functions specified in the prior art and save a rule added for parsing a camera-device-related control instruction as the improved DMS function.

The DMC device 32 may be specifically configured to save all the DMC functions specified in the prior art and save a rule added for writing a camera-device-related control instruction as the improved DMC function.

The camera device 31 may be further configured to, after joining a home network, determine whether a request of acquiring a video stream is received from the DMC device 32; if so, it starts shooting and caches the video data in real time; otherwise, no operation is carried out. Correspondingly, the DMC device 32 may be further configured to send the request of acquiring a video stream to the camera device 31 after joining the home network.

The camera device 31 may be specifically configured to determine whether a camera-device-query message is received from the DMC device 32 after joining the home network; and if so, it returns a response message for the camera-device-query message to the corresponding DMC device 32 and then determine whether a request of acquiring a video stream is received from the DMC device 32. If the request of acquiring a video stream is received, it starts shooting and caches the video data in real time, otherwise, no operation is carried out. If the camera-device-query message is not received, it continues to determine whether the camera-device-query message is received.

Correspondingly, the DMC device 32 may be specifically configured to, after joining the home network, send a camera-device-query message to all the devices in the home network when it needs to use a camera device 31, acquire the corresponding device description information according to the URL address in the received response message for the camera-device-query message, select a camera device 31 according to the acquired device description information, and send a request of acquiring a video stream to the selected camera device 31.

The camera device 31 may be specifically configured to, after starting shooting, encode and compress the shot video in real time to cache it under a specified path, and send a URL address corresponding to the path under which the video data is cached to the corresponding DMC device 32 as a response message for the request of acquiring a video stream. Correspondingly, the DMC device 32 may be further configured to receive the response message for the request of acquiring a video stream from the camera device 31.

The DMC device 32 may be further configured to extract real-time video data from the camera device 31 according to the URL address in the response message for the request of acquiring a video stream, and play video data by using a specified tool. Correspondingly, the camera device 31 may be specifically configured to transmit real-time video data to the DMC device 32.

The DMC device 32 may be further configured to determine whether the camera device 31 supports a rotation function according to the received device description information, and if so, it sends an instruction of rotating the camera to the camera device 31 according to the selection of the user. Correspondingly, the camera device 31 may be further configured to determine whether a rotation instruction is received during the shooting, if so, it adjusts the angle of the camera according to the rotation instruction, otherwise, it continues the shooting.

The DMC device 32 may be further configured to send an instruction of terminating connection to the camera device 31 when a user does not need to watch real-time video monitoring. Correspondingly, the camera device 31 may be further configured to determine in real time whether an instruction of terminating connection is received during the shooting; if so, the transmission of video is stopped, the camera device is turned off and the cached video data is cleaned out; otherwise, the shooting is continued.

The camera device 31 includes an improved DMS function module 311 and a shooting function module 312.

The improved DMS function module 311 is configured to save an improved DMS function, parse a request of acquiring a video stream from a DMC device 32 by using the improved DMS function, and notify the shooting function module 312 to start shooting according to the request.

The shooting function module 312 is configured to start shooting according to the notification from the improved DMS function module 311.

The shooting function module 312 may have a Wi-Fi function and a shooting function which can be provided by a camera device 31 in the prior art.

The improved DMS function device 311 may specifically configured to save all the DMS functions specified in the prior art and save a rule added for parsing a camera-device-related control instruction as the improved DMS function.

The improved DMS function module 311 may be further configured to, after a home network is joined, determine whether a request of acquiring a video stream is received from the DMC device 32; if so, the shooting function module 312 is notified to start shooting; otherwise, no operation is carried out.

The improved DMS function module 311 may be specifically configured to, after the home network is joined, determine whether a camera-device-query message is received from the DMC device 32, if so, it returns a response message for the camera-device-query message to the corresponding DMC device 32 and then determine whether a request of acquiring a video stream is received from the DMC device 32. If the request of acquiring a video stream is received, the shooting function module 312 is notified to start shooting, otherwise, no operation is carried out. If the camera-device-query message is not received, it continues to determine whether the camera-device-query message is received.

The shooting function module 312 may be further configured to, after starting the shooting, encode and compress the shot video in real time to cache it under a specified path, and send a URL address corresponding to the path under which the video data is cached to the improved DMS function module 311. Correspondingly, the improved DMS function module 311 may be further configured to receive the URL address from the shooting function module 312 and send the URL address as the response message for the request of acquiring a video stream to the corresponding DMC device 32.

The improved DMS function module 311 may be further configured to extract real-time video data from the shooting function module 312 and send the extracted real-time video data to the DMC device 32.

The improved DMS function module 311 may be further configured to determine whether an instruction of rotating the camera is received, if so, it parses the instruction of rotating the camera and notifies the shooting function module 312 to adjust the angle of the camera according to the instruction, otherwise, no operation is carried out. Correspondingly, the shooting function module 312 may be further configured to receive the notification from the improved DMS function module 311 and control own camera to adjust the angle.

The improved DMS function module 311 may be further configured to determine whether an instruction of terminating connection is received; if so, the video transmission is stopped and the shooting function module 312 is notified to turn off the camera device and clean out the video data, otherwise, no operation is carried out. Correspondingly, the shooting function module 312 may be further configured to receive from the improved DMS function module 311 the notification of turning off the camera device and cleaning out the cached video data.

The DMC device 32 includes an improved DMC function module 321, which is configured to save the improved DMC function, write a request of acquiring a video stream by using the improved DMC function and send it to the camera device 31.

The improved DMC function device 321 may be specifically configured to save all the DMC functions specified in the prior art and save a rule added for writing a camera-device-related control instruction as the improved DMC function.

The improved DMC function module 321 may be specifically configured to, after the home network is joined, send a camera-device-query message to all the devices in the home network when it needs to use a camera device 31, acquire device description information according to a URL address in the received response message for the camera-device-query message, select a camera device 31 according to the acquired device description information, and then send a request of acquiring a video stream to the selected camera device 31.

The improved DMC function module 321 may be further configured to receive from the camera device 31 a response message for the request of acquiring a video stream, extract real-time video data from the camera device 31 according to the URL address in the response message for the request of acquiring a video stream, and play video data by using a specified play tool.

The improved DMC function module 321 may be further configured to determine whether the camera device 31 supports a rotation function according to the received device description information; and if so, an instruction of rotating the camera is sent to the camera device 31 according to the selection of the user.

The improved DMC function module 321 may be further configured to send an instruction of terminating connection to the camera device 31 when a user does not need to watch real-time video monitoring.

The improved DMC function module may be installed in a mobile phone, a tablet personal computer and other terminals as a hardware module, so that the mobile phone or the tablet personal computer has an improved DMC function and becomes the DMC device.

The above are preferred embodiments of the disclosure, and are not intended to limit the scope of protection of the disclosure.

## Claims

1. A method for video monitoring based on Universal Plug and Play (UPnP), comprising:
by a camera device, receiving a request of acquiring a video stream from a Digital Media Control (DMC) device, wherein there is an improved Digital Media Sever (DMS) function saved on the camera device; and
by the camera device, starting shooting after the camera device parses the request of acquiring the video stream by using the improved DMS function.

2. The method according to claim 1, wherein the improved DMS function comprises: an existing DMS function and a rule of parsing a camera-device-related control instruction,
wherein the rule of parsing the camera-device-related control instruction comprises that: the request of acquiring the video stream is parsed in a Simple Object Access Protocol (SOAP) format, and an instruction of rotating a camera of the camera device is parsed in an Extensible Markup Language (XML) format.

3. The method according to claim 1, further comprising:
before the camera device receives the request of acquiring the video stream from the DMC device,
receiving, by the camera device, a camera-device-query message from the DMC device; and
returning, by the camera device, a response message for the camera-device-query message to the DMC device.

4. The method according to claim 1, further comprising:
after the shooting is started,
adjusting, by the camera device, an angle of a camera of the camera device according to an instruction of rotating the camera from the DMC device.

5. The method according to claim 1, further comprising:
before the camera device receives the request of acquiring the video stream from the DMC device,
by the DMC device, writing the request of acquiring the video stream by using an improved DMC function saved on the DMC device and sending the request of acquiring the video stream to the camera device.

6. The method according to claim 5, wherein the improved DMC function comprises: an existing DMC function and a rule of writing a camera-device-related control instruction,
wherein the rule of writing the camera-device-related control instruction comprises that: the request of acquiring the video stream is written in an SOAP format and an instruction of rotating a camera of the camera device is written in an XML format.

7. The method according to claim 5, further comprising:
before the DMC device writes the request of acquiring the video stream by using the improved DMC function,
by the DMC device, sending a camera-device-query message to the camera device and receiving a response message for the camera-device-query message from the camera device.

8. The method according to claim 5, further comprising:
after the request of acquiring the video stream is sent to the camera device,
when the camera device supports a rotation function, sending, by the DMC device, an instruction of rotating a camera of the camera device to the camera device.

9. A method for video monitoring based on Universal Plug and Play (UPnP), comprising:
by a Digital Media Control (DMC) device, writing a request of acquiring a video stream by using an improved DMC function saved on the DMC device and sending the request of acquiring the video stream to a camera device.

10. The method according to claim 9, wherein the improved DMC function comprises: an existing DMC function and a rule of writing a camera-device-related control instruction,
wherein the rule of writing the camera-device-related control instruction comprises that: the request of acquiring the video stream is written in a Simple Object Access Protocol (SOAP) format and an instruction of rotating a camera of the camera device is written in an Extensible Markup Language (XML) format.

11. The method according to claim 9, further comprising:
before the DMC device writes the request of acquiring the video stream by using the improved DMC function,
by the DMC device, sending a camera-device-query message to the camera device and receiving a response message for the camera-device-query message from the camera device.

12. The method according to claim 9, further comprising:
after the request of acquiring the video stream is sent to the camera device,
when the camera device supports a rotation function, sending, by the DMC device, an instruction of rotating a camera of the camera device to the camera device.

13. A system for video monitoring based on Universal Plug and Play (UPnP), comprising: a camera device and a Digital Media Control (DMC) device,
wherein the camera device is configured to save an improved DMS function, receive a request of acquiring a video stream from the DMC device, and start shooting after parsing the request of acquiring the video stream by using the improved DMS function, and
wherein the DMC device is configured to save an improved DMC function, write the request of acquiring the video stream by using the improved DMC function and send the request of acquiring the video stream to the camera device.

14. A camera device, comprising: an improved DMS function module and a shooting function module,
wherein the improved DMS function module is configured to save an improved DMS function, parse a request of acquiring a video stream from a DMC device by using the improved DMS function, and notify the shooting function module to start shooting according to the request, and
wherein the shooting function module is configured to start shooting according to the notification from the improved DMS function module.

15. The camera device according to claim 14, wherein the improved DMS function module is configured to save an existing DMS function and a rule of parsing a camera-device-related control instruction,
wherein the rule of parsing the camera-device-related control instruction comprises that: the request of acquiring the video stream is parsed in an SOAP format, and an instruction of rotating a camera of the camera device is parsed in an XML format.

16. The camera device according to claim 15, wherein
the improved DMS function module is further configured to, when receiving a camera-device-query message from the DMC device, return a response message for the camera-device-query message to the DMC device.

17. The camera device according to claim 16, wherein the improved DMS function module is further configured to notify a shooting control module to adjust an angle of the camera according to the instruction of rotating the camera of the camera device from the DMC device, and
wherein the shooting control module is configured to receive the notification from the improved DMS function module and adjust the angle of the camera according to the notification.

18. A DMC device, comprising: an improved DMC function module, which is configured to save an improved DMC function, write a request of acquiring a video stream by using the improved DMC function and send the request of acquiring the video stream to a camera device.

19. The DMC device according to claim 18, wherein the improved DMC function module is configured to save an existing DMC function and a rule of writing a camera-device-related control instruction, and
wherein the rule of writing the camera-device-related control instruction comprises that: the request of acquiring the video stream is written in an SOAP format, and an instruction of rotating a camera of the camera device is written in an XML format.

20. The DMC device according to claim 19, wherein the improved DMC function module is further configured to send a camera-device-query message to the camera device and receive a response message for the camera-device-query message from the camera device.

21. The DMC device according to claim 20, wherein the improved DMC function module is further configured to send an instruction of rotating the camera of the camera device to the camera device when the camera device supports a rotation function.
